# EUROPÄISCHE PATENTSCHRIFT

(11) **EP 4 308 819 B1**
(45) Veröffentlichungstag und Bekanntmachung des Hinweises auf die Patenterteilung: **28.01.2026**
(21) Anmeldenummer: 22730437.5
(22) Anmeldetag: 24.05.2022
(51) Int. Cl.: F15B 1/10, B22F 5/10, B33Y 80/00, F16J 3/04, B22F 10/28

(54) **TRENNELEMENT UND HYDROSPEICHER MIT EINEM SOLCHEN TRENNELEMENT**
SEPARATING ELEMENT AND HYDRAULIC ACCUMULATOR HAVING SUCH A SEPARATING ELEMENT
ÉLÉMENT DE SÉPARATION ET ACCUMULATEUR HYDRAULIQUE DOTÉ D'UN TEL ÉLÉMENT DE SÉPARATION

(30) Priorität: 10.06.2021 DE 102021002971
(43) Veröffentlichungstag der Anmeldung: 24.01.2024
(73) Patentinhaber: Hydac Technology GmbH, 66280 Sulzbach/Saar (DE)
(72) Erfinder: KLOFT, Peter, 56235 Ransbach-Baumbach (DE); KUSSEROW, Torsten, 54340 Thörnich (DE)
(74) Vertreter: Bartels und Partner, Patentanwälte
(86) Internationale Anmeldenummer: PCT/EP2022/063977
(87) Internationale Veröffentlichungsnummer: WO 2022/258359

(56) Entgegenhaltungen:
- EP-A1- 1 975 417
- EP-A2- 2 682 207
- WO-A2-03/016722
- DE-A1- 102015 206 251

## Beschreibung

Die Erfindung betrifft einen Hydrospeicher mit den Merkmalen des Oberbegriffs des Anspruchs 1.

Durch DE 100 09 865 B4 ist ein hydropneumatischer Druckspeicher, insbesondere Pulsationsdämpfer bekannt, der in der Art eines Balgspeichers ausgebildet ist und der zumindest aufweist:
- ein Speichergehäuse, das einen Fluidraum für die Aufnahme einer einen Vorspanndruck erzeugenden Gasfüllung sowie einen weiteren Fluidraum für die Aufnahme eines Hydraulikmediums enthält;
- einen die beiden Fluidräume voneinander trennenden Metallbalg, der am einen Ende durch eine Endplatte abgeschlossen und mit seinem anderen Ende mit dem Speichergehäuse derart verbunden ist, dass sein Innenraum den weiteren Fluidraum für das Hydraulikmedium bildet;
- einen in der Wand des Speichergehäuses ausgebildeten Kanal, der in den weiteren Fluidraum ausmündet; und
- eine Bewegung der Endplatte des Metallbalges begrenzende Anschlageinrichtung.

Durch die Anschlageinrichtung mit je einem die Innenseite und die Außenseite der Endplatte des Metallbalges beaufschlagenden Anschlag steht eine mechanische Hubbegrenzung sowohl für das Zusammenziehen als auch für das Ausziehen des Trennbalges zur Verfügung. Dadurch ist der Metallbalg wirksam gegenüber zu großen Belastungen geschützt und bleibt auch über eine längere Einsatzdauer hinweg funktionsfähig.

Für den Erhalt des einstückigen Metallbalges werden zunächst dünnwandige Rohre als Membranausgangsmaterial angefertigt, die durch Längsnahtschweißen im Endlosverfahren herstellbar sind. Anschließend wird der dahingehende Rohrzylinder durch Umformen zu einem Balg, bei dem ringförmige Wellen als Balgfalten ausgeformt werden müssen. Dabei kommen überwiegend hydraulische Umformverfahren zum Einsatz. Darüber hinaus besteht noch die Möglichkeit, die wellenförmigen Balgfalten durch mechanische Rollumformung zu erhalten.

Beiden Fertigungsverfahren ist jedoch gemeinsam, dass Balgfalte um Balgfalte einzeln aus einem Vollmaterial hergestellt wird, wobei jede Balgfalte an ihrer jeweiligen Umlenkstelle im Querschnitt gesehen bogenförmig, insbesondere halbkreisförmig, ausgebildet ist. Mit den bekannten Balgherstellverfahren ist eine die Balglebensdauer beeinträchtigende Wanddickenreduzierung, beispielsweise im Bereich der Umlenkstelle mit dem bogenförmigen Verlauf, weitgehend verhindert. Nachteilig ist jedoch, dass man für jede Trennbalggröße als durchgehende Einzelmembran ein von der Größe her zugehöriges Rohr erst anzufertigen hat, was den Herstellaufwand erhöht. Ferner verlaufen in einem Ausgangszustand der Membran, vor der Ausziehbewegung, die zu den Balgfalten zugehörigen Membranflächen parallel zueinander, was im Betrieb des Trennbalges mit einer Vielzahl von Auszieh- und Zusammenziehvorgängen zu einer ungünstigen Spannungseinleitung in das Membranmaterial führt, so dass zumindest langfristig, insbesondere im Bereich der Umlenkstellen, mit einem Materialversagen zu rechnen sein dürfte.

Des Weiteren ist durch DE 10 2006 014 456 A1 ein Hydrospeicher mit einem Speichergehäuse bekannt, in dessen Innenraum ein Metallbalg angeordnet ist, der eine Mehrzahl von einzelnen Membranscheiben aufweist, deren Ränder wechselseitig miteinander durch Schweißnähte verbunden sind, und der insoweit ein bewegbares Trennelement zwischen einer Gasseite und einer Fluidseite bildet, deren Volumina durch in Axialrichtung erfolgendes Ausziehen und Zusammendrücken des Metallbalges innerhalb des Speichergehäuses veränderlich sind. Dadurch, dass bei zumindest einem Teil der Membranscheiben die Schweißnähte derart dimensioniert sind, dass die in Richtung der Dicke der Membranscheiben gemessene Dicke der Schweißnähte höchstens gleich der Gesamtdicke der zu verschweißenden Membranscheiben ist, ergibt sich für die Membranscheiben ein weit günstigerer Belastungszustand, als wenn der Metallbalg, wie im sonstigen Stand der Technik aufgezeigt, durch eine durch hohen Außendruck erzeugte Druckdifferenz vollständig zusammengedrückt wird.

Mit der bekannten Lösung lassen sich auch kreisförmige Membranscheiben zu einem hohlzylindrischen Metallbalg zusammenschweißen, die zwischen den spitz zulaufenden Schweißnähten jeweils eine Profilierung mit einer zur Längsachse des Metallbalges konzentrisch verlaufenden Wellenform aufweisen. Geht eine dahingehende Membranscheibe mit Wellenform mit benachbart angeschweißten Membranscheiben vergleichbarer Ausgestaltung "auf Block", ist der Metallbalg vollständig zusammengedrückt und die wellenförmigen Membranscheiben stützen sich gegenseitig in besonders vorteilhafter Weise ab. Dabei eventuell auftretende Querkräfte führen insoweit nicht ungewollt zu einem gegenseitigen Abgleiten der Membranscheiben, was zu einem Versagen im Bereich der Schweißnähte führen könnte. Trotz der dahingehenden zusätzlichen Sicherheit über die Wellenform kann natürlich ein Versagen im Hinblick auf die Vielzahl von Schweißnähten grundsätzlich nicht ausgeschlossen werden, auch wenn diese mittels moderner Laserschweißeinrichtungen zustande kommen.

Weitere Faltenbälge gehen aus der EP 2 682 207 A2, der DE 10 2015 206 251 A1, der WO 03/016722 A2 und der EP 1 975 417 A1 hervor.

Ausgehend von diesem Stand der Technik liegt der Erfindung die Aufgabe zugrunde, einen Hydrospeicher, zu schaffen, der sich einfach und kostengünstig herstellen lässt und der auch über eine lange Einsatzdauer hinweg versagensfrei betrieben werden kann.

Eine dahingehende Aufgabe löst ein Hydrospeicher mit den Merkmalen des Patentanspruches 1.

Erfindungsgemäß wird das Trennelement aus einer einstückigen, einzelnen Membran zusammen mit den einzelnen Balgfalten mittels eines 3D-Druckverfahrens respektive additiven Fertigungsverfahrens hergestellt. Als besonders geeignet hat sich dabei das sogenannte Elektronenstrahlschmelzen als 3D-Druckverfahren erwiesen. Bei dem Elektronenstrahlschmelzen (Electronic Beam Melting) wird ein Metallpulver schichtweise aufgeschmolzen und als Trennelement zusammen mit seinen Balgfalten abgetragen. Ebenso geeignet ist das selektive Laserschmelzen, bei dem ein Metallpulver lediglich lokal aufgeschmolzen wird. Gleichfalls möglich ist der Einsatz des selektiven Lasersinterns, bei dem ein Metallpulver mit einem Laser kurzzeitig derart erhitzt wird, dass dies schmilzt, wobei es sich anschließend wieder unter Bildung des metallischen Trennelementes verfestigt. Alle vorstehend genannten 3D-Druckverfahren gehören im weitesten Sinne der Gattung der Sinter- und Pulverdruckverfahren an.

Dabei kann jedes Trennelement als dreidimensionales Objekt durch schichtweisen Aufbau des Membranmaterials individuell erhalten werden, wobei auch eine Serienfertigung mit größerer Stückzahl möglich ist. Dergestalt ist auf einfache und kostengünstige Weise das Trennelement erhalten, ohne dass der Einsatz hydraulischer Umformverfahren oder von Rollierverfahren und/oder von Schweißverfahren notwendig wäre.

Des Weiteren hat sich aus der Verbindung des 3D-Druckverfahrens mit der speziellen Geometrie des Trennelementes, bei der die Umlenkstellen der Balgfalten im Querschnitt gesehen bogenförmig ausgebildet sind und bei der die fiktiven Verlängerungen der an einer jeden Umlenkstelle jeweils benachbart angrenzenden Membranflächen, zumindest in einem Ausgangszustand, einen spitzen Winkel miteinander einschließen, ergeben, dass in jedem Betriebszustand des Trennelementes in der Membran, ein isotensoider oder ein im Wesentlicher isotensoider Spannungsverlauf erreicht ist, so dass materialschädigende Überbeanspruchungen auch im dynamischen Betrieb, beispielsweise im Rahmen einer üblichen Hydrospeicheranwendung, vermieden sind. Die Auslegung der einzelnen Balgfalten mit ihren bogenförmigen respektive gerundeten Umlenkstellen führt also auch im dynamischen Betrieb zu einer gleichförmigen Spannungseinleitung und Verteilung in der gesamten Membran.

Für einen günstigen Spannungsverlauf innerhalb des membranartigen Trennelementes hat es sich als günstig erwiesen, dass die jeweiligen im Querschnitt gesehen bogenförmigen Umlenkungen zumindest teilweise aus einem Halbkreisbogen gebildet sind. Vorzugsweise ist dabei ferner vorgesehen, dass der spitze Winkel zwischen zwei angrenzenden Membranflächen im Ausgangszustand ≤ 30° ist, vorzugsweise ≤ 20° ist.

Bei einer besonders bevorzugten Ausführungsform des erfindungsgemäßen Trennelementes ist vorgesehen, dass das Membranmaterial der Membran, vorzugsweise mittig, zwischen zwei benachbarten Umlenkstellen, die auf einer gemeinsamen Seite der Membran liegen, in der Wandstärke reduziert ist. Es ist für einen Durchschnittsfachmann überraschend, dass er trotz dieser Wandschwächung zu einem gleichförmigen, verbesserten Spannungseintrag in die Membran kommt, was zu deren Langlebigkeit mitbeiträgt.

Bei einer weiteren bevorzugten Ausführungsform des erfindungsgemäßen Trennelementes ist vorgesehen, dass die jeweilige Membranfläche zwischen zwei benachbarten Umlenkstellen, die auf gegenüberliegenden Seiten der Membran liegen, einen wellenförmigen Verlauf aufweisen. Dabei können im Rahmen einer Eigenstabilisierung die einzelnen wellenförmigen Membranflächen bei einer Aneinanderlage auf Block zumindest teilweise bündig ineinandergreifen, was die Stabilität insgesamt erhöht.

In vorteilhafter Weise ist dabei vorgesehen, dass bei einer Wellenform der Membran, die in Stapelfolge gesehen eine Membranfläche bezogen auf die bogenförmige Umlenkstelle einen stärkeren Neigungsverlauf aufweist, als die benachbart an diese Umlenkstelle angrenzende Membranfläche, so dass die in der Stapelfolge immer jeweils übergeordneten Membranflächen von der darunterliegenden, flacher verlaufenden Membranfläche entsprechend gestützt werden, was im dynamischen Betrieb das Auszieh- und Zusammenziehverhalten des Balges als Ganzes begünstigt.

Die bevorzugt für das im 3D-Druckverfahren erhaltene Trennelement eingesetzten Materialien sind Titan, Edelstahl oder Aluminium.

Besonders bevorzugt bildet das Trennelement respektive die Membran im fertiggedruckten Zustand eine Art Hohlzylinder aus, so dass sich das Trennelement ganz allgemein als Kompensatoreinrichtung auch im Rahmen eines Ausgleichelementes für fluidführende Rohrleitungen ohne Weiteres einsetzen lässt.

Im Folgenden wird das erfindungsgemäße Trennelement sowie ein Hydrospeicher nach der Zeichnung anhand verschiedener Ausführungsbeispiele näher erläutert. Dabei zeigen in prinzipieller und nicht maßstäblicher Darstellung die
- Fig. 1 und 2: in einem stark schematisch vereinfachten Längsschnitt ein Ausführungsbeispiel eines Hydrospeichers mit einem bewegbaren Trennelement im Innenraum des Speichergehäuses, einmal in Form eines ausgezogenen Metallbalges und einmal im zusammengezogenen auf Block befindlichen Zustand;
- Fig. 3: einen Ausschnitt auf eine Faltenanordnung eines Trennelementes mit geradlinig verlaufendem Faltenverlauf;
- Fig. 4: einen hohlzylindrischen Metallbalg, wie er sich aus einem Faltenverlauf nach der Fig. 3 ergibt;
- Fig. 5: ein weiteres Ausführungsbeispiel für ein balgförmiges Trennelement mit wellenförmigem Faltenverlauf;
- Fig. 6: einen nach beiden Seiten weitergezeichneten Faltenverlauf, wie er sich aus der Darstellung nach der Fig. 5 ergibt; und
- Fig. 7: einen halbseitig aufgeschnittenen hohlzylindrischen Faltenbalg, wie er sich aus der Faltenanordnung gemäß den Darstellungen nach den Fig. 5 und 6 ergibt.

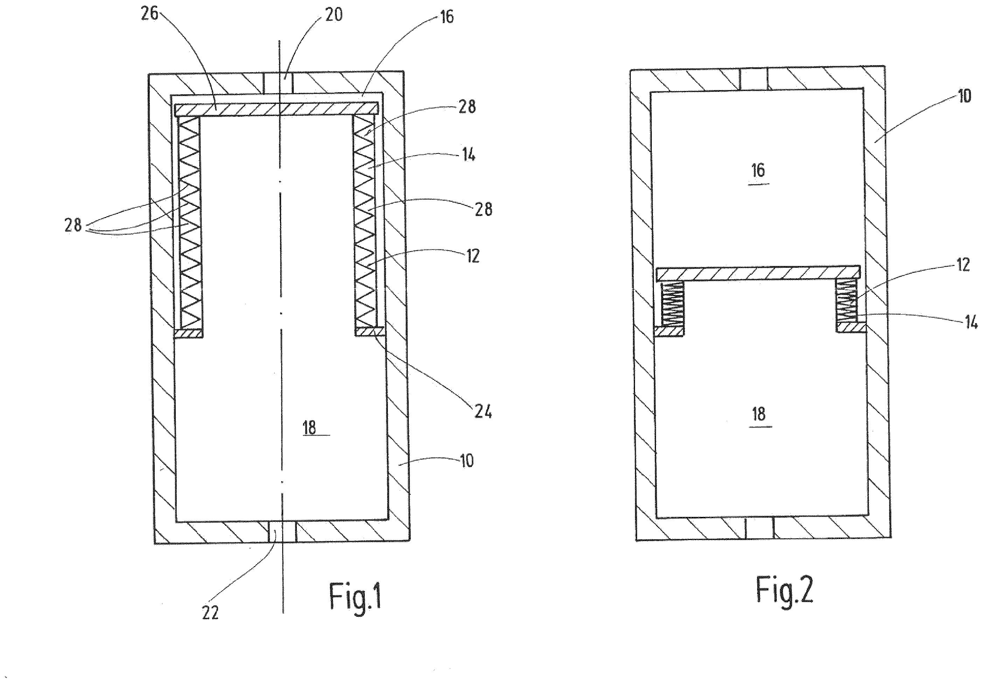

Der als Balgspeicher konzipierte Hydrospeicher nach den Fig. 1 und 2 weist beispielhaft ein kreiszylindrisches Speichergehäuse 10 auf, wobei im Innenraum des Speichergehäuses 10 ein Metallbalg 12 vorgesehen ist, der als bewegbares Trennelement 14 dient, das im Innenraum des Speichergehäuses 10 eine Gasseite 16 von einer Fluidseite 18 trennt. In der bei derartigen Hydrospeichern üblichen Weise sind am Speichergehäuse 10 ein zur Gasseite 16 führender Anschluss 20 für ein Arbeitsgas, vorzugsweise Stickstoffgas, sowie ein zur Fluid- oder Flüssigkeitsseite 18 führender Fluidanschluss 22 vorhanden.

Der Metallbalg 12 respektive das Trennelement 14 ist an seinem in Blickrichtung auf die Fig. 1 und 2 gesehen unteren, offenen Ende mit einem Befestigungsring 24 verschweißt, der an der Innenwand des Speichergehäuses 10 festgelegt ist. Das andere Ende des Metallbalges 12 ist durch eine, vorzugsweise angeschweißte, Endplatte 26 fluiddicht abgeschlossen. Zwischen der Endplatte 26 und dem Befestigungsring 24 weist der Metallbalg 12 eine Vielzahl von einzelnen aufeinanderfolgenden Balgfalten 28 auf, deren Ausgestaltung unter Bezugnahme auf die folgenden Figuren noch näher erläutert werden wird.

Fig. 1 zeigt den Hydrospeicher in einem Betriebszustand mit geringem oder fehlendem Gasdruck auf der Gasseite 16, wobei dahingehend der Metallbalg 12 in einem ausgezogenen Zustand dargestellt ist, so dass das freie Volumen der an der Balgaußenseite befindlichen Gasseite 16 verkleinert und das Volumen der an der Innenseite des Metallbalges 12 angrenzenden Fluidseite 18 vergrößert ist.

Demgegenüber zeigt Fig. 2 einen Betriebszustand bei geringem oder fehlendem Fluiddruck auf der Fluid- oder Flüssigkeitsseite 18, wobei der Metallbalg 12 respektive das Trennelement 14 vollständig zusammengedrückt ist und wobei die einzelnen Balgfalten 28 zur gegenseitigen Abstützung aneinander angepresst sind, was man fachsprachlich als "Blocklage" oder "auf Block gehen" bezeichnet. Insoweit bildet der Metallbalg 12 eine außerordentlich druckfeste Struktur aus, so dass der Hydrospeicher auch bei sehr hohem Gasdruckniveau bei einem Abfall oder einem vollständigen Fehlen des Fluiddruckes betriebssicher bleibt.

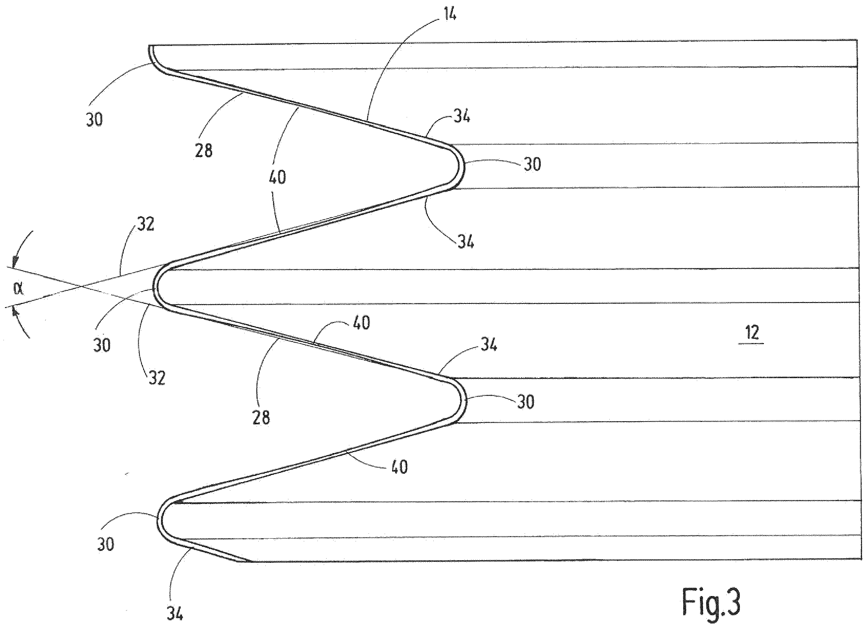

Fig. 3 zeigt nun eine mögliche Ausführungsform eines kreisringförmigen Metallbalges 12 mit einzelnen Balgfalten 28 in Übereinanderanordnung, wobei die obere und die untere Balgfalte 28 nicht vollständig dargestellt sind, und es versteht sich, dass in Abhängigkeit von der Einsatzlösung eine Vielzahl solcher übereinander angeordneter Balgfalten 28 das Trennelement 14 bilden. Die jeweilige Balgfalte 28 bildet nach außen und innen hin gesehen einzelne Umlenkstellen 30 aus, die im Querschnitt gesehen bogenförmig verlaufend sind, insbesondere zumindest teilweise im außenliegenden Bereich einen Halbkreisbogen aufweisen. Eine jede einzelne Balgfalte 28 durchläuft eine Wegstrecke von einem Wellenberg aus gesehen zu einem Wellental und zu einem wiederum darauffolgenden Wellenberg, jeweils gebildet aus den halbkreisförmigen Umlenkstellen 30. Wie sich des Weiteren aus der Fig. 3 ergibt, schließen die fiktiven Verlängerungen 32 der an einer jeden Umlenkstelle 30 jeweils benachbart angrenzenden Membranflächen 34, in dem in den Fig. 1 und 3 gezeigten voll ausgezogenen Ausgangszustand, einen spitzen Winkel α miteinander ein, der ≤ 30° ist. Nimmt hingegen der Metallbalg 12 seine in der Fig. 2 gezeigte Blocklage ein, bewegen sich die jeweils benachbarten Paare von Membranflächen 34 aufeinander zu, bei gleichzeitiger Vergrößerung des Winkels α.

Das in der Fig. 3 gezeigte Trennelement besteht aus einer einzelnen, einstückigen Membran, die in einem 3D-Druckverfahren hergestellt ist.

Insbesondere kommt zur Herstellung der Trennmembran ein Pulverdruckverfahren zum Einsatz. Als Metallpulver für das 3D-Druckverfahren können Stahlmaterialien, wie Edelstahl, zum Einsatz kommen oder Werkstoffe, wie Titan oder Aluminium. Die dahingehende Materialaufzählung ist nur beispielhaft und selbstredend können hier auch andere geeignete Metalle im Rahmen des 3D-Druckverfahrens zum Einsatz kommen.

Dadurch, dass die Umlenkstellen 30 der jeweiligen Balgfalte 28 im Querschnitt gesehen bogenförmig ausgebildet sind und dass für den Ausgangszustand des Metallbalges 12 nach der Fig. 3, angrenzende Membranflächen 34 den spitzen Winkel α miteinander einschließen, ist insgesamt ein Trennelement 14 erhalten, das über seine gesamte Oberfläche einen isotensoiden oder im Wesentlichen isotensoiden Spannungsverlauf aufweist, d. h. es ist eine gleichförmige Spannungseinleitung sowie Spannungsverteilung in das Trennelement 14 über seine gesamte 3D-Aufbaukonstruktion erreicht, so dass auch im dynamischen Betrieb Spannungsspitzen im Membranmaterial vermieden sind, was einem lang andauernden Betrieb zugutekommt und ein schnelles Reaktionsverhalten für das Trennelement 14, auch bei hoher dynamischer Beanspruchung, erlaubt. Dies hat so keine Entsprechung im Stand der Technik.

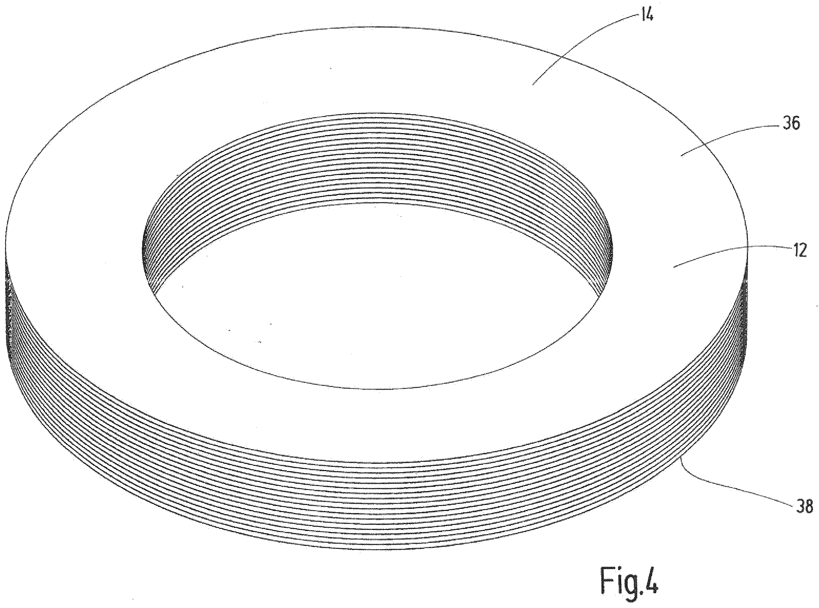

Der in der Fig. 3 nur ausschnittsweise dargestellte Metallbalg 12 ist als Ganzes in der Fig. 4 wiedergegeben und bildet insoweit ein Trennelement 14 aus, wie es auf Block gehend, dargestellt in der Fig. 2 wiedergegeben ist. Dabei ist die Oberseite 36 mit der Endplatte 26 verbunden und die Unterseite 38 des Metallbalges 12 mit dem Befestigungsring 24 für das Festlegen des Trennelementes 14 auf der Innenseite des Speichergehäuses 10 gemäß den Darstellungen nach den Fig. 1 und 2. Es versteht sich, dass im Rahmen des 3D-Druckverfahrens es auch grundsätzlich möglich ist, sowohl die Endplatte 26 als auch gegebenenfalls den Befestigungsring 24 einstückig mit dem Metallbalg 12 aus entsprechenden Metallwerkstoffen auszubilden.

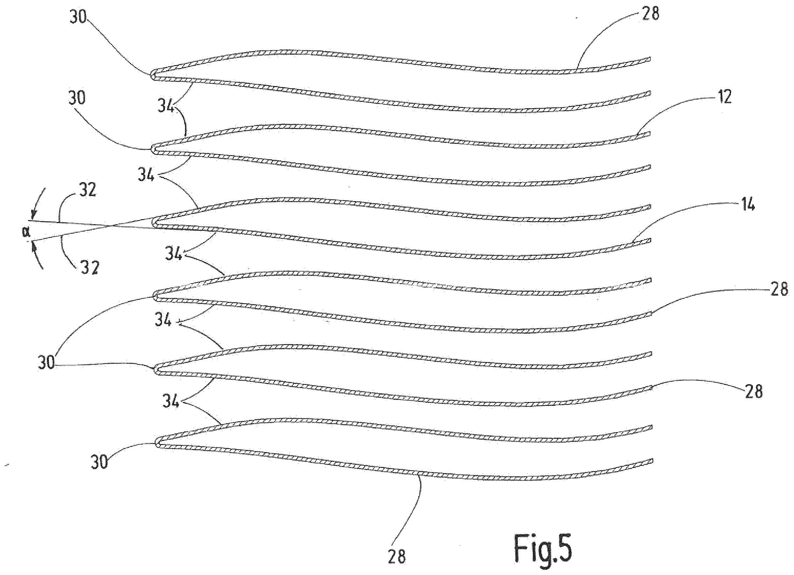

Fig. 5 zeigt eine weitere, gegenüber der Lösung nach den Fig. 3 und 4 geänderte Trennelementlösung, wobei die bisherigen Ausführungen auch für die geänderte Ausführungsform gelten, und insoweit werden für dieselben Komponenten auch dieselben Bezugszeichen verwendet. Die Fig. 5 zeigt einen Ausschnitt auf eine wellenförmige Membran, bei der die Umlenkstellen 30 wiederum endseitig mit einem halbkreisförmigen Bogenverlauf versehen sind. Auch hier schließen die paarweise einander zugeordneten Membranflächen 34, mit ihren fiktiven Verlängerungen 32 an einer jeden Umlenkstelle 30, einen spitzen Winkel α von weniger als 20° miteinander ein, insbesondere einen Winkel von 15°. Dergestalt entsteht im jeweils au-ßenumfangsseitigen Endbereich des Trennelementes im Querschnitt gesehen eine Art Keil, der besonders wirksam ist, im Rahmen der Kräfteaufnahme beim Zusammendrücken des Metallbalges 12.

Wie sich des Weiteren aus der Fig. 5 ergibt, weist in Stapelabfolge die jeweils zuoberst aufliegende Membranfläche 34 gegenüber der darunterliegenden Membranfläche 34 einer Balgfalte 28, eine stärkere Krümmung auf, was zur Erhöhung der Biegefestigkeitswerte führt. Des Weiteren ist beim Einfedern einer jeden Balgfalte 28, durch den flacher verlaufenden Untergrund, gebildet durch die Membranfläche 34, eine verbesserte Abstützwirkung erreicht mit entsprechend hoher Krafteinleitung. Fig. 5 betrifft wiederum den Ausgangszustand bei auseinandergezogenen Balgfalten 28, gemäß der Darstellung nach der Fig. 1. Des Weiteren sind die einzelnen Balgfalten 28 im Wesentlichen auf einem konstanten Abstand zueinander gehalten sowohl im auseinandergezogenen, als auch im zusammengezogenen Zustand.

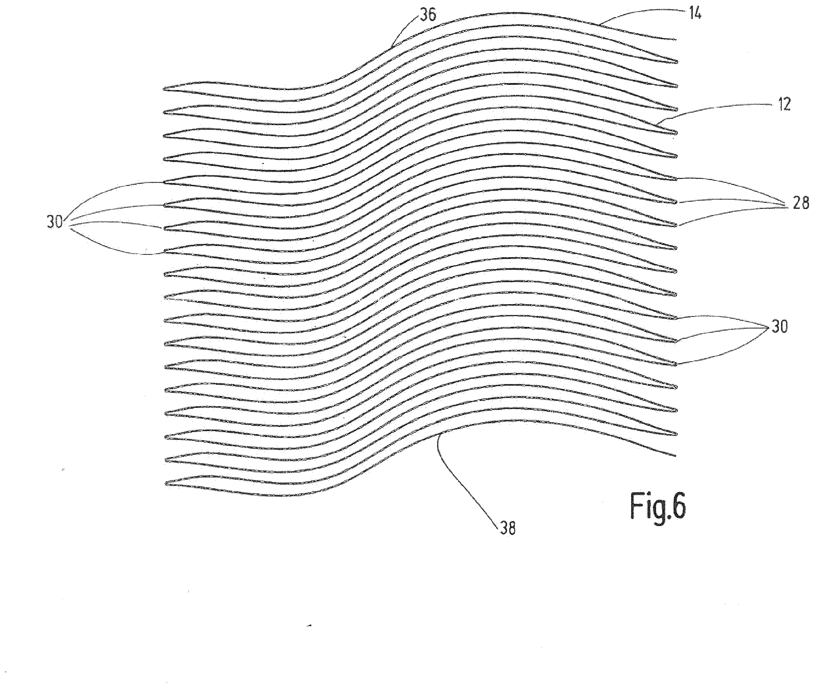

Fig. 6 gibt den Faltenverlauf nach der Fig. 5 für eine wellenförmige Trennmembran als Ganzes wieder mit in einem äußeren Wandbereich und einem inneren Wandbereich angeordneten Umlenkstellen 30.

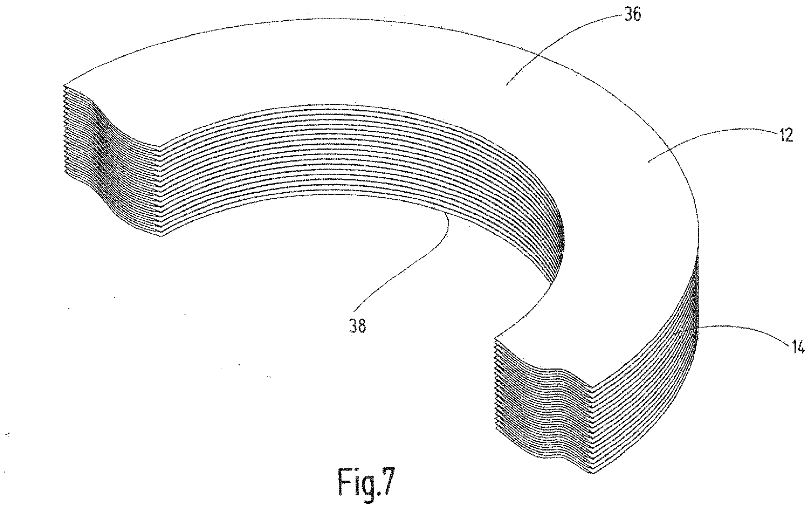

Die Darstellung nach der Fig. 7 stellt einen Halbschnitt dar und zeigt vergleichbar der Darstellung nach der Fig. 4, das Trennelement als Hohlzylinder, das wiederum mit seiner Oberseite 36 mit der Endplatte 26 verbindbar ist und mit seiner Unterseite 38 mit dem Befestigungsring 24. Wie sich des Weiteren aus den Fig. 5 und 6 ergibt, greifen die Membranflächen 34 bei ihrer wellenförmigen Ausgestaltung, zumindest teilweise, mit ihren Oberflächen ineinander ein, sofern die einzelnen Balgfalten 28 auf Block, gemäß der Darstellung nach der Fig. 2 gehen. Insoweit ergibt sich auch eine verbesserte Aussteifung gegenüber etwaig auftretenden Querkräften.

Wie sich des Weiteren aus der Fig. 3 ergibt, besteht die Möglichkeit, das Membranmaterial der Membran, vorzugsweise mittig zwischen zwei benachbarten Umlenkstellen 30 einer Balgfalte 28 von der Wandstärke her zu reduzieren, wobei der dahingehende Bereich der Wandstärkenreduzierung in der Fig. 3 mit 40 bezeichnet ist. Eine dahingehende Wanddickenreduzierung ist dem Grunde nach auch bei der Membran nach den Fig. 5 bis 7 möglich. Es ist für einen Durchschnittsfachmann auf dem Gebiet der Auslegung solcher Trennelemente überraschend, dass er zu einem verbesserten Biegekraftverhalten kommt trotz der angesprochenen Wandstärkenreduzierung 40.

## Patentansprüche

1. Hydrospeicher mit einem Speichergehäuse (10) und einem darin angeordneten balgförmigen Trennelement (14), das innerhalb des Speichergehäuses (10) zwei Medienräume (16, 18) voneinander separiert,
**dadurch gekennzeichnet,**
**dass** das Trennelement (14), das im 3D-Druckverfahren hergestellt ist, aus einer einzelnen Membran besteht, die unter Bildung einer Vielzahl von Balgfalten (28) an Umlenkstellen (30) im Querschnitt gesehen bogenförmig umgelenkt ist, die die Balgfalten (28) nach außen und innen hin begrenzen; und
**dass** für den Erhalt eines isotensoiden oder im Wesentlichen isotensoiden Spannungsverlaufs in der Membran die fiktiven Verlängerungen (32) der an einer jeden Umlenkstelle (30) jeweils benachbart angrenzenden Membranflächen (34), zumindest in einem Ausgangszustand, einen spitzen Winkel (α) miteinander einschließen.

2. Hydrospeicher nach Anspruch 1, **dadurch gekennzeichnet, dass** die jeweilige im Querschnitt gesehen bogenförmige Umlenkstelle (30) zumindest teilweise aus einem Halbkreisbogen gebildet ist.

3. Hydrospeicher nach Anspruch 1 oder 2, **dadurch gekennzeichnet, dass** der spitze Winkel (α) ≤ 30° ist, vorzugsweise ≤ 20° ist.

4. Hydrospeicher nach einem der vorstehenden Ansprüche, **dadurch gekennzeichnet, dass** das Membranmaterial der Membran, vorzugsweise mittig, zwischen zwei benachbarten Umlenkstellen (30), die auf einer gemeinsamen Seite der Membran liegen, in der Wandstärke (40) reduziert ist.

5. Hydrospeicher nach einem der vorstehenden Ansprüche, **dadurch gekennzeichnet, dass** die jeweilige Membranfläche (34) zwischen zwei benachbarten Umlenkstellen (30), die auf gegenüberliegenden Seiten der Membran liegen, einen wellenförmigen Verlauf aufweisen.

6. Hydrospeicher nach Anspruch 5, **dadurch gekennzeichnet, dass** der Wellenverlauf der einzelnen Membranflächen (34) derart gleich ausgebildet ist, dass bei einer Aneinanderlage der Membranflächen (34) auf Block diese bündig ineinandergreifen.

7. Hydrospeicher nach Anspruch 5 oder 6, **dadurch gekennzeichnet, dass** bei einer Wellenform der Membran, die in Stapelfolge eine Membranfläche (34) bezogen auf die bogenförmige Umlenkstelle (30) einen stärkeren Neigungsverlauf aufweist als die benachbart an diese Umlenkstelle (30) angrenzende Membranfläche (34).

8. Hydrospeicher nach einem der vorstehenden Ansprüche, **dadurch gekennzeichnet, dass** die Materialien, aus denen die Membran aufgebaut ist,
- Titan;
- Edelstahl; oder
- Aluminium
sind.

9. Hydrospeicher nach einem der vorstehenden Ansprüche, **dadurch gekennzeichnet, dass** die Membran im fertiggedruckten Zustand eine Art Hohlzylinder ausbildet.

## Claims

1. Hydraulic accumulator, having an accumulator housing (10) and a bellows-shaped separating element (14) arranged therein, which separates two media chambers (16, 18) from one another inside the accumulator housing (10),
**characterised in that**
the separating element (14), which is manufactured in the 3D printing method, consists of an individual membrane, which is deflected in an arcuate manner, viewed in cross-section, at deflection points (30), forming a large number of bellows folds (28), said deflection points delimiting the bellows folds (28) towards the inside and the outside; and
in order to obtain an isotensoid or substantially isotensoid stress profile in the membrane, the notional extensions (32) of the membrane surfaces (34) adjacently abutting each deflection point (30) in each case, at least in an initial state, enclose an acute angle (α) with one another.

2. Hydraulic accumulator according to claim 1, **characterised in that** the respective arcuate deflection point (30), viewed in cross-section, is at least partially formed by a semi-circular arc.

3. Hydraulic accumulator according to either claim 1 or claim 2, **characterised in that** the acute angle (α) is ≤ 30°, preferably ≤ 20°.

4. Hydraulic accumulator according to any of the preceding claims, **characterised in that** the membrane material of the membrane, preferably centrally, has a reduced wall thickness (40) between two adjacent deflection points (30) lying on a common side of the membrane.

5. Hydraulic accumulator according to any of the preceding claims, **characterised in that** the respective membrane surface (34) has an undulating profile between two adjacent deflection points (30) lying on opposite sides of the membrane.

6. Hydraulic accumulator according to claim 5, **characterised in that** the undulating profile of the individual membrane surfaces (34) is configured in the same way such that, when the membrane surfaces (34) lie on top of one another in a block, these engage flush with one another.

7. Hydraulic accumulator according to either claim 5 or claim 6, **characterised in that**, when the membrane has an undulating shape, in a stacked sequence one membrane surface (34) has a greater inclined profile in relation to the arcuate deflection point (30) than the membrane surface (34) adjacently abutting this deflection point (30).

8. Hydraulic accumulator according to any of the preceding claims, **characterised in that** the materials from which the membrane is constructed are
- titanium;
- stainless steel; or
- aluminium.

9. Hydraulic accumulator according to any of the preceding claims, **characterised in that** the membrane in the finished printed state forms a kind of hollow cylinder.

## Revendications

1. Accumulateur hydraulique comprenant une enveloppe (10) d'accumulateur et un élément (14) de séparation en forme de soufflet, qui y est monté et qui, à l'intérieur de l'enveloppe (10) de l'accumulateur, sépare deux espaces (16, 18) pour des fluides l'un de l'autre,
**caractérisé**
**en ce que** l'élément (14) de séparation, qui est fabriqué par un procédé d'impression en 3D, est constitué d'une membrane individuelle, qui, avec formation d'une pluralité de plis (28) de soufflet, est renvoyée en forme d'arc, considéré en section transversale en des points (30) de renvoi, qui délimitent les plis (28) de soufflet vers l'extérieur et l'intérieur ; et **en ce que**, pour l'obtention d'une courbe de tension isotensoïde ou sensiblement isotensoïde dans la membrane, les prolongements (32) fictifs des surfaces (34) de la membrane au voisinage respectivement de chaque point (30) de renvoi font entre eux, au moins dans l'état initial, un angle (α) aigu.

2. Accumulateur hydraulique suivant la revendication 1, **caractérisé en ce que** le point (30) de renvoi respectif en forme d'arc, considéré en section transversale, est formé au moins en partie d'un arc en demi-cercle.

3. Accumulateur hydraulique suivant la revendication 1 ou 2, **caractérisé en ce que** l'angle (α) aigu est ≤ à 30°, de préférence ≤ à 20°.

4. Accumulateur hydraulique suivant l'une des revendications précédentes, **caractérisé en ce que** le matériau de la membrane, de préférence au milieu, entre deux points (30) de renvoi voisins, qui sont sur une face commune de la membrane, est réduit en épaisseur (40) de paroi.

5. Accumulateur hydraulique suivant l'une des revendications précédentes, **caractérisé en ce que** les surfaces (34) respectives de la membrane entre deux points (30) de renvoi voisins, qui sont sur des faces opposées de la membrane, ont un tracé ondulé.

6. Accumulateur hydraulique suivant la revendication 5, **caractérisé en ce que** le tracé ondulé des diverses surfaces (34) de la membrane ont la même constitution, de manière à ce que, dans une position l'une sur l'autre des surfaces (34) de la membrane en un bloc, celles-ci s'interpénètrent à affleurement.

7. Accumulateur hydraulique suivant la revendication 5 ou 6, **caractérisé en ce que**, pour une forme ondulée de la membrane, la surface (34) de la membrane dans la séquence d'empilage a, rapporté au point (30) de renvoi en forme d'arc, un tracé incliné plus prononcé que la surface (34) de la membrane voisine de ce point (30) de renvoi.

8. Accumulateur hydraulique suivant l'une des revendications précédentes, **caractérisé en ce que** les matériaux en lesquels la membrane est constituée, sont
- le titane ;
- l'acier fin ; ou
- l'aluminium.

9. Accumulateur hydraulique suivant l'une des revendications précédentes, **caractérisé en ce que** la membrane constitue à l'état fini d'impression une sorte de cylindre creux.
